Europäisches Patentamt

European Patent Office

Office européen des brevets

(11) Veröffentlichungsnummer: **0 503 368 A1**

# (12) EUROPÄISCHE PATENTANMELDUNG

(21) Anmeldenummer: **92103234.8**

(22) Anmeldetag: **26.02.92**

(51) Int. Cl.5: **F16F 1/12**

(30) Priorität: **09.03.91 DE 4107702**

(43) Veröffentlichungstag der Anmeldung:
**16.09.92 Patentblatt 92/38**

(84) Benannte Vertragsstaaten:
**BE DE DK FR GB IT**

(71) Anmelder: **DEERE & COMPANY**
**1 John Deere Road**
**Moline, Illinois 61265(US)**

(72) Erfinder: **Becker, Herbert**
**Im Haargarten 2**

**W-6660 Zweibrücken(DE)**
Erfinder: **Kempf, Bernd**
**Friedhofstrasse 10**
**W-6661 Althornbach(DE)**
Erfinder: **Sefrin, Willi**
**Schottenbachstrasse 18**
**W-6662 Contwig 1(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Feder.**

(57) Federn, insbesondere mechanische Federn, werden häufig unter einer bestimmten Vorspannung eingebaut und hierzu um ein vorberechnetes Maß gelängt oder zusammengedrückt. Bisher wird diese Vorspannung entweder mit separaten Lehren oder mittels eines Maßstabs geprüft. Es wird eine Feder (10) vorgeschlagen, bei der eine Lehre (18) vorgesehen ist, die Teil eines der Befestigungsteile (14,16) ist, die sich an den Federteil (12) anschließen und mit denen die Feder (10) befestigt wird. Diese Lehre (18) enthält eine Bezugsfläche (24), die mit einer Markierung (20) auf dem Federteil (12) oder dem anderen Befestigungsteil (16,14) in Deckung gebracht werden kann. Derartige Federn (10) finden z. B. bei Erntemaschinen Anwendung.

Die Erfindung betrifft eine Feder, insbesondere mechanische Feder, mit einem nachgiebigen Federteil, einem ersten und einem zweiten Befestigungsteil, die unter Vorspannung eingebaut wird.

Federn stellen ein herkömmliches Maschinenelement zur Aufrechterhaltung einer Spannung, z. B. in einem Riemengetriebe, an einer nachgiebigen Plattform, einem Hebel oder dergleichen dar. In einer Vielzahl von Fällen werden die Federn mit einer Vorspannung eingebaut, um bereits im Ruhezustand eine bestimmte Spannung aufzubauen, die eine sichere Funktion gewährleistet und bei Lastanfall größer oder kleiner wird. Die Vorspannung entspricht einer bestimmten und errechenbaren Größe der Formveränderung der Feder. Demnach wird beispielsweise eine Schraubenzugfeder zum Aufbau einer bestimmen Vorspannung um ein errechnetes Maß gelängt und in dem gespannten Zustand montiert. In ähnlicher Weise wird die Vorspannung bei einer Schraubendruckfeder, einer Biegefeder, einer Torsionsfeder oder einem als Feder wirkenden Gummielement bestimmt. Zum Einstellen einer vorberechneten Vorspannung wird die Größe der Feder im gespannten Zustand herkömmlich mittels eines Maßstabs gemessen oder mittels einer Lehre geprüft. Während die erste Methode zeitraubend ist, bedarf es zur Durchführung der zweiten Methode eines zusätzlichen Teils.

Die der Erfindung zugrunde liegende Aufgabe wird darin gesehen, eine Feder vorzuschlagen, bei der ohne eine separate Lehre und ohne die Zuhilfenahme eines Maßstabes in einfacher Weise die Vorspannung geprüft bzw. eingestellt werden kann.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise dient ein Teil der Feder selbst als Lehre und ein weiterer als Markierung; diese gehen somit nicht verloren, und separate Teile brauchen nicht gefertigt zu werden.

Auf einfache Weise kann die Lehre aus einer letzten Windung einer Schraubendruck- oder zugfeder gebildet werden, die über den eigentlichen Federteil hinaus verlängert und in der Zug- oder Druckrichtung der Feder geführt wird. Die Länge der Lehre, d. h. des abgebogenen Windungsstücks bemißt sich dann nach dem Maß der zu erreichenden Vorspannung.

In einer weiteren bevorzugten Ausführung bildet die abgebogene Windung zugleich die Öse einer Schraubenzugfeder, mit der sie an einem festen Teil oder an dem Spannteil festgemacht wird.

Die Markierung könnte sowohl durch eine Kerbe, wie auch durch eine Formgebung an dem anderen Befestigungsteil gebildet werden. Am einfachsten kann aber als Markierung die Endkante der letzten Windung auf der der Lehre gegenüberliegenden Seite der Feder verwendet werden. Soll die Feder unter verschiedenen Verhältnissen mit unterschiedlichen Vorspannkräften eingebaut werden, ist es sinnvoll, die Markierung durch einen Farbtupfer oder einen Farbstrich herzustellen, die an verschiedenen Stellen angebracht werden kann. Es ist auch möglich, Markierungen verschiedener Farben für jeweils andere Vorspannkräfte aufzubringen.

Die Erfindung ist nicht auf die Anwendung bei einer sich auf einer Geraden verändernden Feder beschränkt, sondern kann auch z. B. bei einer Torsionsfeder verwendet werden, bei der einer der Befestigungsteile ein bestimmtes Bogenmaß bewegt werden muß, um die betreffende Vorspannung in der Feder aufzubauen. Auch in diesem Fall kann die äußere Windung in Richtung der Radialen als Lehre abgekröpft werden und zusammen mit einer auf einem bestimmten Bogenmaß angebrachten Markierung anzeigen, ob die gewünschte Vorspannung erreicht ist oder nicht.

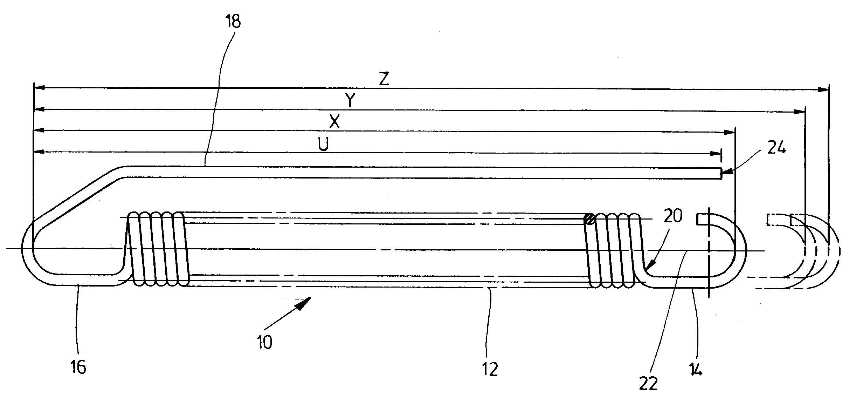

In der Zeichnung ist ein nachfolgend näher beschriebenes Ausführungsbeispiel der Erfindung dargestellt. Die einzige Figur zeigt eine Feder 10 mit einem Federteil 12, einem ersten Befestigungsteil 14, einem zweiten Befestigungsteil 16, einer Lehre 18 und einer Markierung 20.

Die Feder 10 ist in diesem Fall als eine Schraubenzugfeder ausgebildet und hat in einem ungespannten Zustand die Fertigungslänge -X-. Eine derartige Feder 10 kann z. B. bei einem Mähdrescher zum Spannen eines Riementriebs eingesetzt werden.

Der Federteil 12 wird von einer Vielzahl gleicher Windungen gebildet, die schraubenförmig und konzentrisch zu einer Längsmittenachse 22 zwischen den Befestigungsteilen 14 und 16 verlaufen.

Der erste Befestigungsteil 14 ist als einfache Hakenöse ausgebildet, die einen Fortsatz der letzten Windung darstellt und in eine Bohrung, beispielsweise eines ortsfesten Trägers, Rahmens oder dergleichen, gegebenenfalls über eine Einstellvorrichtung eingehängt werden kann.

Der zweite Befestigungsteil 16 ist ebenfalls als Hakenöse geformt und kann z. B. an dem beweglichen, zu spannenden Teil befestigt werden.

Die Lehre 18 wird von einer Verlängerung des zweiten Befestigungsteils 16 gebildet und stellt somit eine körperliche Einheit mit dem zweiten Befestigungsteil 16, dem Federteil 12 und dem ersten Befestigungsteil 14 dar. Die Lehre 16 ist in diesem Fall ein Stück des Drahts, der für die Herstellung der Windungen verwendet wird. Die Lehre 16 ist so geführt, daß sich ihre Längsmittenachse parallel zu der Längsmittenachse 20 des Federteils 12 erstreckt, nachdem sie von dem zweiten Befestigungsteil 16 abgekröpft worden ist. Die Länge der Lehre 18 ist mit -U- angegeben, und es ist aus der Zeichnung zu ersehen, daß sich die Lehre 18 bis nahezu an das äußere Ende des ersten Befestigungsteils 14, jedenfalls relativ weit über den Federteil 12 hinaus erstreckt; dieser Überstand ist jedoch abhängig von der Größe der gewünschten Vorspannung. Die Lehre 18 endet mit einer Bezugsfläche 24.

Das dem ersten Befestigungsteil 14 zugelegene Ende des Federteils 12 bildet mit der äußeren Kante der ersten bzw. letzten Windung die Markierung 20.

Nimmt die Feder 10 die Fertigungslänge -X- ein, liegen die Windungen aneinander, d. h. die Feder 10 sitzt auf Block. Wird die Feder 10 auf eine bestimmte Vorspannung gespannt, bilden sich Zwischenräume zwischen den Windungen und die Feder 10 nimmt eine Vorspannlänge -Y- ein. Wird die Feder 10 während des Betriebs über die Vorspannung hinaus gespannt, kann sie z. B. eine Länge -Z- erreichen.

Während die Feder 10 aus ihrer Fertigungslänge -X- gespannt wird, verändert sich die relative Stellung der Bezugsfläche 24 zu der Markierung 20 und gelangt dann mit dieser in Deckung, wenn die geforderte Vorspannung erreicht ist. Nimmt man an, daß die Feder 10 einenends an einem ortsfesten Rahmen oder dergl. über eine ebenfalls nicht gezeigte Stellvorrichtung und anderenends an dem zu spannenden Teil über den jeweiligen Befestigungsteil 14, 16 eingehängt ist, so kann durch eine Längenänderung der Einstellvorrichtung die Feder 10 so lange gelängt werden, bis sich die Markierung 20 und die Bezugsfläche 24 decken.

## Patentansprüche

1.  Feder (10), insbesondere mechanische Feder, mit einem nachgiebigen Federteil (12), einem ersten und einem zweiten Befestigungsteil (14, 16), die unter Vorspannung eingebaut wird, dadurch gekennzeichnet, daß einer der Befestigungsteile (14, 16) mit einer Lehre (18) und der andere Befestigungsteil (16, 14) oder der Federteil (12) mit einer Markierung (20) versehen ist.

2.  Feder nach Anspruch 1, dadurch gekennzeichnet, daß sie als Schraubenfeder ausgebildet ist und die Lehre (18) von einer letzten Windung gebildet wird, die in der Kraftangriffsrichtung abgebogen ist.

3.  Feder nach Anspruch 1 oder 2, dadurch gekennzeichnet, daß sie als Schraubenzugfeder ausgebildet ist und einer der Befestigungsteile (14, 16) als eine Öse zur Befestigung ausgebildet ist, deren einer Schenkel in Richtung der Längsachse der Feder (10) zur Bildung der Lehre (18) gebogen ist.

4.  Feder nach Anspruch 2 oder 3, dadurch gekennzeichnet, daß die Markierung (20) von der letzten Windung des anderen Befestigungsteils (16, 14) gebildet wird.

5.  Feder nach Anspruch 2 oder 3, dadurch gekennzeichnet, daß die Markierung (20) von einer optischen Anzeige auf dem Federteil (12) oder dem anderen Befestigungsteil (16, 14) gebildet wird.

6.  Feder nach Anspruch 1, dadurch gekennzeichnet, daß sie als Torsionsfeder ausgebildet ist und die äußere Windung zur Bildung einer Lehre (18) in Richtung der Radialen abgekröpft ist.

7.  Feder nach Anspruch 6, dadurch gekennzeichnet, daß sich die Markierung auf einer der inneren Windungen befindet.

Europäisches Patentamt

Nummer der Anmeldung

# EUROPÄISCHER RECHERCHENBERICHT

## EINSCHLÄGIGE DOKUMENTE

EP 92103234.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 3 856 288 (ALVAREZ) * Fig. 1-6 * | 1,2 | F 16 F 1/12 |
| A | DE - B - 1 775 146 (DANFOSS A/S) * Fig. 2,3 * | 1,2 | |
| A | DD - A - 207 959 (VEB JUNKALOR DESSAU) * Fig. 1-3 * | 1 | |
| A | DE - A - 3 420 804 (PERFECTION SPRING & STAMPING CORPORATION) * Fig. 1-5 * | 1 | |
| A | DD - A - 247 252 (VEB FEDERWERK MARIENBERG) * Fig. 2 * | 1 | |
| A | GB - A - 2 212 242 (BIRTLEY MANUFACTURING LTD) * Fig. 1 * ———— | 1 | RECHERCHIERTE SACHGEBIETE (Int Cl⁵)  F 16 F 1/00 |

Der vorliegende Recherchenbericht wurde für alle Patentansprüche erstellt.

| Recherchenort | Abschlußdatum der Recherche | Prüfer |
|---|---|---|
| WIEN | 25-05-1992 | KAMMERER |

EPA Form 1503 03 82